# EUROPEAN PATENT SPECIFICATION

(11) **EP 4 181 431 B1**
(45) Date of publication and mention of the grant of the patent: **04.11.2026**
(21) Application number: 21834354.9
(22) Date of filing: 28.06.2021
(51) Int. Cl.: H04L 9/40, H04L 41/0659, H04L 41/0823

(54) **SERVICE TRANSMISSION METHOD AND APPARATUS, NETWORK DEVICE, AND STORAGE MEDIUM**
DIENSTÜBERTRAGUNGSVERFAHREN UND -VORRICHTUNG, NETZWERKVORRICHTUNG UND SPEICHERMEDIUM
PROCÉDÉ ET APPAREIL DE TRANSMISSION DE SERVICE, DISPOSITIF DE RÉSEAU, ET SUPPORT D'ENREGISTREMENT

(30) Priority: 29.06.2020 CN 202010610244
(43) Date of publication of application: 17.05.2023
(73) Proprietor: ZTE Corporation, Shenzhen, Guangdong 518057 (CN)
(72) Inventor: LI, Rui, Shenzhen, Guangdong 518057 (CN); WU, Shuihua, Shenzhen, Guangdong 518057 (CN); LI, Baojun, Shenzhen, Guangdong 518057 (CN)
(74) Representative: Savi, Massimiliano
(86) International application number: PCT/CN2021/102693
(87) International publication number: WO 2022/001937

(56) References cited:
- WO-A1-2014/177170
- CN-A- 106 230 640
- CN-A- 107 659 424
- CN-A- 108 848 041
- CN-A- 109 525 501
- CN-A- 109 526 013
- JP-A- 2013 009 259
- JP-A- 2013 539 285
- US-A1- 2016 204 983
- US-A1- 2016 380 888
- US-B1- 8 566 460

## Description

### CROSS-REFERENCE TO RELATED APPLICATION

The present application relates to the field of communication techniques, for example, to a measurement method and apparatus, a communication node, and a storage medium

### FIELD

The present invention relates to the technical field of communications, and in particular to a service transmission method and apparatus, a network device, and a storage medium.

### BACKGROUND

The implementation principle of network security protocol is to negotiate a key and set a security rule through the protocol, encrypt a user data packet that meets the rule, and perform integrity checking on the data packet. For some centralized access points, additional packet headers are added to encapsulate user packets in tunnels, a typical example of which is the tunnel mode of the Encapsulating Security Payload (ESP) protocol of IPsec. The MACsec protocol may also encrypt and encapsulate a Virtual Local Area Network (VLAN) tag and an internal Ethernet packet of a user, so that an external device is completely unaware of communicated packets, thereby protecting security of the communications link.

The security policies, for example, both IPsec and MACsec, of conventional network security protocols are statically configured, and a rule is fixed once user configuration takes effect, in which case the security is good and security requirements can be implemented completely according to a user's rule.

However, once a network failure occurs, whether it is a failure of a security device, or a failure of corresponding software or function, it will cause an interruption of the communication link between two parties, disabling service transmission.

WO2014/177170A1 discloses the SCTP multi homing in LTE backhaul with two parallel ipsec tunnels for two different IP addresses. US2016/204983A1 discloses the system and method for providing virtual private networks. JP2013539285A17 discloses the method and apparatus for restoring connectivity through a provider network on demand. JP2013009259A discloses the route control device, route control program, route control method, and route control system.

### SUMMARY

Embodiments of the present invention propose a service transmission method and apparatus, a network device, and a storage medium.

An embodiment in accordance with an aspect of the present invention provides a method for performing service transmission at a network device that supports a network security protocol, including:
adjusting a current network configuration and modifying a current security rule in response to a fault of a current link being detected at the network device, wherein the current link comprises a link or channel for data transmission between the network device and an external device after encryption and decryption by a security gateway, and the external device comprises a remote management device or a remote control device, and wherein adjusting the current network configuration comprises at least one of:
switching from a loopback Internet protocol, IP, address corresponding to a preset protocol to a physical network interface IP address; or
adjusting a virtual local area network, VLAN, configuration;
determining a temporary interface based on an adjusted network configuration;
causing the temporary interface to be accessible to the external device, wherein the temporary interface is utilized to establish a temporary link between the external device and the network device; and
performing service transmission using a modified security rule on the temporary link.

An embodiment in accordance with another aspect of the present invention provides a apparatus for performing service transmission at a network device that supports a network security protocol, including:
a detection module configured to adjust a current network configuration and modify a current security rule in response to a fault of a current link being detected, wherein the current link comprises a link or channel for data transmission between the network device and an external device after encryption and decryption by a security gateway, and the external device comprises a remote management device or a remote control device, and wherein adjusting the current network configuration comprises at least one of:
switching from a loopback Internet protocol, IP, address corresponding to a preset protocol to a physical network interface IP address; or
adjusting a virtual local area network, VLAN, configuration;
a determination module configured to determine a temporary interface based on an adjusted network configuration;
an interface module configured to cause the temporary interface to be accessible to the external device, wherein the temporary interface is utilized to establish a temporary link between the external device and the network device; and
a transmission module configured to perform service transmission using a modified security rule on the temporary link.

An embodiment in accordance with yet another aspect of the present invention provides a network device, including:
at least one processor; and
a memory configured to store at least one program, where
the at least one program, when executed by the at least one processor, causes the at least one processor to perform any one of the methods according to the embodiments of the present invention.

An embodiment in accordance with still another aspect of the present invention provides a storage medium storing a computer program which, when executed by a processor, causes the processor to perform any one of the methods according to the embodiments of the present invention.

The above embodiments and other aspects and the implementations thereof in the present invention are further described in the brief description of drawings, detailed description, and claims.

### BRIEF DESCRIPTION OF THE DRAWINGS

Fig. 1 is a schematic diagram of a security protocol application scenario;
Fig. 2 is a flowchart of a service transmission method provided by an embodiment of the present invention;
Fig. 3 is a flowchart of service data transmission through a newly enabled temporary link provided by an embodiment of the present invention;
Fig. 4 is a flowchart of a service transmission scheme provided by an embodiment of the present invention;
Fig. 5 is a schematic diagram of a service transmission apparatus provided by an embodiment of the present invention; and
Fig. 6 is a schematic diagram of a network device provided by an embodiment of the present invention.

### DETAILED DESCRIPTION OF EMBODIMENTS

In order to make the purposes, technical schemes and advantages of the present invention clear, the embodiments of the present invention will be described hereinafter in detail with reference to the accompanying drawings. It should be noted that the embodiments of the present invention and the features in the embodiments can be combined arbitrarily with each other without conflict.

The steps shown in the flowcharts of the drawings may be performed in a computer system, such as with a set of computer-executable instructions. Moreover, although a logical order is shown in the flowcharts, the steps shown or described may be performed, in some cases, in a different order than shown or described herein.

With the development of network security, there have been mature frameworks and theories, related to many scenarios and methods, including cryptography, access control, authentication management, transmission security, sensitive data protection, etc. The transmission security is the main technology to ensure confidentiality and integrity of data transmission in an untrusted network environment. Transport security technologies mainly include Media Access Control Security (MACsec), Internet Protocol Security (IPsec), Secure Sockets Layer (SSL), Transport Layer Security (TLS), and the like. IPsec protocol is the most widely used protocol, which can solve network layer security problems, and is applied to a secure transmission protocol between a base station and a core network.

The implementation principle of network security protocol is to negotiate a key and set a security rule through the protocol, encrypt a user data packet that meets the rule, and perform integrity checking on the data packet. For some centralized access points, additional packet headers are added to encapsulate user packets in tunnels, a typical example of which is the tunnel mode of the ESP protocol of IPsec. The MACsec protocol may also encrypt and encapsulate a VLAN tag and an internal Ethernet packet of a user, so that an external device is completely unaware of communicated packets, thereby protecting security of the communications link.

The security policies, for example, both IPsec and MACsec, of conventional network security protocols are statically configured, and a rule is fixed once user configuration takes effect, in which case the security is good and security requirements can be implemented completely according to the user's rule. However, once a network failure occurs, whether it is a failure of a security device, or a failure of corresponding software or function, it will cause an interruption of the communication link between two parties. Due to characteristics of the security protocols, for example, data is forcibly encrypted according to the security rule, an encrypted packet of a sender cannot be decrypted by a device other than the faulty peer device, or the received data cannot be correctly decrypted and is discarded.

For example, security policies are configured for both parties of IPsec communication, and a management plane packet of the data is encrypted and encapsulated through an ESP tunnel mode. If a responder, Security Gateway (SeGW) is faulty, and an IPsec initiator continues to encrypt and send the management plane packet, the peer end cannot analyze the packet. If update re-negotiation of a link detection key fails, the management plane packet is discarded, consequently network management or management tools of a receiver cannot access the device normally. For some distributed devices, such as base stations, maintenance personnel are required to find out the causes and solve them on site, which is extremely costly.

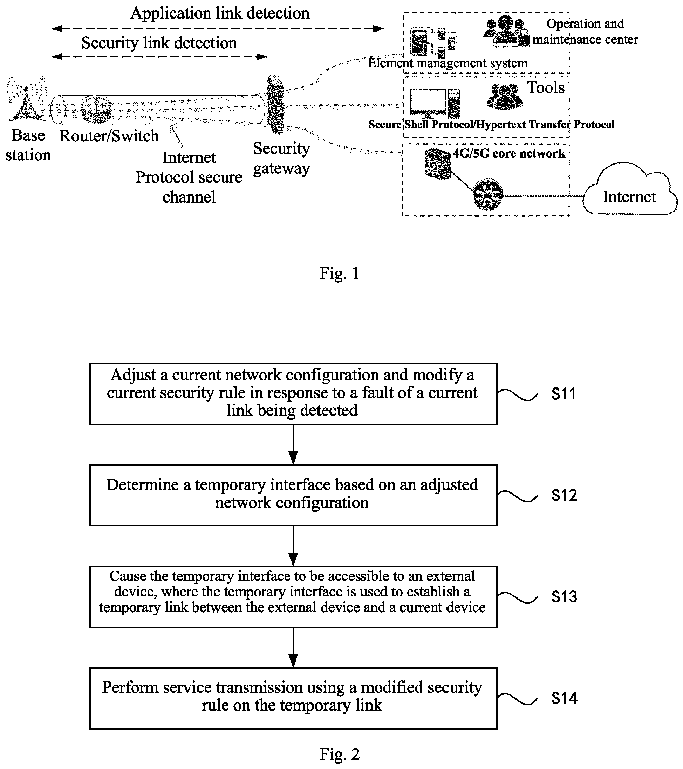

Fig. 1 is a diagram of a security protocol application scenario. As shown in Fig. 1 , typical networking of a radio access network includes an Operation and Maintenance Center (OMC), Tools, an Evolved Packet Core (EPC) or a 5G Core, a SeGW, a base station, a router or a switch. Here, OMC includes an Element Management System (EMS). Tools include remote access tools: Secure Shell (SSH) and HyperText Transfer Protocol over Secure Socket Layer (HTTPs).

Links between the base station and OMC, Tools and EPC/5G Core are application links. The link between the base station and the SeGW is a secure link.

In an embodiment, there is provided a service transmission method. Fig. 2 is a flowchart of a service transmission method provided by an embodiment of the present invention. As shown in Fig. 2, the service transmission method provided by the embodiment of the present invention mainly includes steps S11, S12, S13 and S14.

At S11, a current network configuration is adjusted and a current security rule is modified in response to a fault of a current link being detected.

At S12, a temporary interface is determined based on an adjusted network configuration.

At S13, the temporary interface is made accessible to an external device, where the temporary interface is utilized to establish a temporary link between the external device and a current device.

At S14, service transmission is performed using a modified security rule on the temporary link.

In this embodiment, the service transmission method is performed by the current device. The current device includes a network device that supports a network security tunneling protocol, for example, the current device is a base station or a set-top box.

The current link is a link or channel through which the current device performs data transmission with the external device after encryption and decryption through the SeGW. The current network configuration refers to a configuration status of the network in a normal state of the current link. The current security rule is a security rule or security protocol adopted in a normal state of the current link.

It should be noted that different detection methods can be used based on different security protocols of the current link. The link detection method is not specified in this embodiment.

In this embodiment, the external device is a remote management device or a remote control device, such as OMC, EMS, or SSH shown in Fig. 1.

In an implementation, adjusting a current network configuration includes at least one of:
- switching from a loopback Internet protocol (IP) address corresponding to a preset protocol to a physical network interface IP address;
- adjusting a virtual local area network (VLAN) configuration;
- adjusting an address translation policy of a centralized access device.

The address translation policy of the centralized access device includes at least one of: for the centralized access device, adding a translation relationship between an internal address and an external address, a routing table of the temporary link, or an access control list (ACL) configuration.

In an implementation, in response to switching from a loopback IP address corresponding to a preset protocol to a physical network interface IP address, determining a temporary interface based on an adjusted network configuration includes: determining a corresponding temporary interface based on the physical network interface IP address.

In an implementation, modifying a current security rule includes at least one of: setting a security rule of unencrypted transit for an important service; removing a current interface from an encryption group; skipping encrypting a current packet; or in response to a VLAN tag being configured for the current packet, returning to a normal VLAN configuration.

In an implementation, the important service includes at least one of: a management plane service, a control plane service, or a user-defined service.

In this embodiment, the service of the current device may be all services of the current device. In this embodiment, the service of the current device may be an important service of the current device. The important service may include the management plane service and/or control plane service, or may include the user-defined service.

For a device, not all data is needed to be restored as it is costly to do so, and bypassing the security protocol also reduces security of the service. In this embodiment, a new temporary access channel is provided merely for an important management packet or a control plane packet once a security protocol fault occurs.

In an implementation, a fault of the current link includes a security link failure and an application link failure.

The security link failure is a failure between security protocol layers, and the application link failure is a link failure between application layers. For example, in a 7-layer network architecture, the application layer is above the security layer (which may be deployed above the transport layer, network layer, and link layer).

A fault of the current link can be detected. In an implementation, if an interrupted application link is detected, security link detection is initiated. Subsequently, if an interrupted security link is detected, it is determined that the current link is faulty.

In an implementation, the temporary link includes: an address translation protocol of an intermediate forwarding device or a centralized access device, and a bypass temporary channel.

In an implementation, performing service transmission using a modified security rule on the temporary link includes: in response to the external device accessing the current device through an internal network, performing service transmission through the address translation protocol of the intermediate forwarding device or the centralized access device.

In this embodiment, the intermediate forwarding device may be the switch or router shown in Fig. 1, and the centralized access device may be the SeGW shown in Fig. 1.

In this embodiment, after a fault of the current link occurs, if the intermediate forwarding device or the centralized access device is in normal use without a fault, a service packet may be transmitted through the address translation protocol of the intermediate forwarding device or the centralized access device.

Transmission through the address translation protocol can be understood as the intermediate forwarding device or centralized access device only transmitting a service packet after performing translation according to the address translation protocol, but does not perform decryption or encryption on the packet.

In an implementation, performing service transmission using a modified security rule on the temporary link includes: in response to the external device accessing the current device through the bypass temporary channel, performing service transmission through the bypass temporary channel.

In this embodiment, after a fault of the current link occurs, if the intermediate forwarding device or the centralized access device cannot be used normally, the external device directly accesses the current device through the bypass temporary channel, and transmits the service through the bypass temporary channel. Here, the bypass temporary channel means that the external device, bypassing the intermediate forwarding device and the centralized access device, directly accesses the current device by using a transmission reachable link, without the need for the address translation protocol of the intermediate forwarding device or the centralized access device.

In an implementation, after causing the temporary interface to be accessible to an external device, the method further includes: storing the adjusted network configuration, the modified security rule, and a service list; and in response to the next fault of the link, invoking the stored modified network configuration, modified security rule, and service list.

In this embodiment, once the temporary link is established, the temporarily generated network configuration and security rule, as well as the service-related list, are stored, so that the configuration can be read first next time a fault occurs in the link. This saves the trouble of modifying the network configuration and security rule every time a fault occurs.

In an implementation, after causing the temporary interface to be accessible to an external device, the method further includes: switching to the current network configuration (for example, the previous network configuration before the fault occurred) according to a set period; and performing a reset operation in response to the number of switching failures exceeding a set number.

If an important service to be protected cannot be restored after switching to the temporary link, switching to an original configuration is performed in a predetermined time or time periods. If the service still cannot be restored, after the number of switches exceeds a certain threshold, other manners such as reset may be performed to retrieve the situation.

In an implementation, after causing the temporary interface to be accessible to an external device, the method further includes: switching to the current network configuration and the current security rule in response to restoration of the current link being detected; and providing a service for the external device using the current network configuration and the current security rule.

After the network enables the service transmission method, once a security protocol fault occurs, the network may provide re-access to important services to the best of its ability, thus effectively improving availability of the system.

In an embodiment, in the case of a network security protocol fault, the current device needs to try its best to ensure access to important services, such as management plane services or control plane services. After a fault is detected, according to the networking situation, IP network transmission or the like is switched, a transmission configuration and a security policy are automatically switched at the same time, a previously encrypted packet is modified into non-encrypted or tunnel encapsulated states, and corresponding address translation and route forwarding rules are configured on the intermediate forwarding device or the centralized access device in advance, so as to ensure access to important services as much as possible.

Both parties in communication need to regularly or actively detect a current link.

Here, detection is classified into different levels, including detection of a security protocol link between security devices and detection of an application link between application devices.

In an implementation, in response to an interrupted application link being detected, security link detection is further initiated; and in response to an interrupted security link being detected, it is determined that the current link is faulty. If the security device and the application device are the same device, the detection processes can be integrated.

A user can carry out network planning in advance according to the current network configuration.

To switch to a new transport IP address after a fault of the security protocol of the current device occurs, a new address translation policy needs to be configured on the intermediate forwarding device or centralized access device (such as firewall or SeGW). The address translation policy includes network address translation (NAT) or a routing table of a new transmission link, and an ACL configuration.

In response to a detected fault in the link, the current device automatically adjusts the corresponding network configuration, modifies the current security rule of important services, and causes a new temporary interface to be accessible to the external, so that the external device can be temporarily hosted by the current device to provide a temporary service. The temporary interface is a control interface or a management interface.

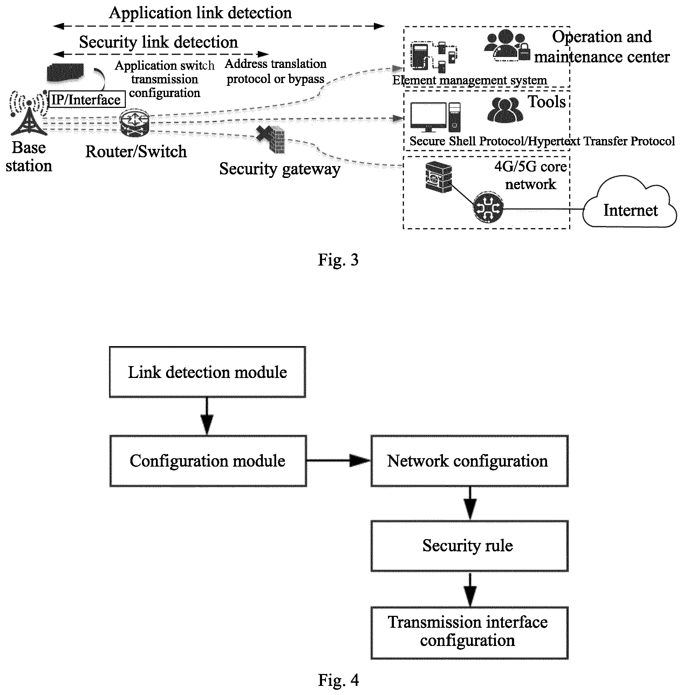

As shown in Fig. 3, after a security protocol link fault occurs, a new temporary link is established, so that the current device directly transmits data with the current device through NAT or bypassing the centralized access device.

Here, the important service may be a management plane service, a control plane service, or user-defined service data.

The network configuration mainly includes IP addresses associated with important services, corresponding network ports, VLAN and other configurations, and also includes address translation policies (such as NAT) and ACL configurations of intermediate network devices. For example, a loopback IP address that the service is previously associated with in the security tunnel is temporarily allocated to an interface IP address of a specified physical network port. For centralized access devices (such as SeGW or firewall) in the network, translation relationships between internal addresses and external addresses and a corresponding routing forwarding table are added, and a public IP mapped by the internal network is placed in an ACL access-allowed list.

Security rules may be processing rules for encryption, rejection, direct transit and other operations on packets that meet current characteristics (which may typically be quintuple, that is, source IP, destination IP, protocol, source port, destination port), or specific processing rules from the users for certain types of packets.

Making a new temporary interface accessible to the external can facilitate a newly created service, or a service which is encrypted by the previous security protocol or which is encapsulated in a tunnel and cannot be directly accessed, to be hosted by a new service hosting.

The external device re-accesses the current device, and sends a packet to the current device through network address translation of the intermediate forwarding device or the centralized access device. A packet returned by the current device is no longer encapsulated by the previous security protocol or security tunnel, but directly uses a new access protocol.

Once the temporary link is established, the temporarily generated network configuration and security rule, as well as the service-related list, are stored, so that the configuration can be read first next time a fault occurs in the link.

If the current device detects restoration of the security link or application link, the current device sets a switching rule, deletes the temporarily generated configuration and rule, then switches to the original configuration, and re-encapsulates the service in the original security protocol or security tunnel.

If an important service to be protected cannot be restored after switching to the temporary link is performed, switching to an original configuration is performed in a predetermined time or time periods. If the service still cannot be restored, after the number of switches exceeds a certain threshold, other manners such as reset may be performed to retrieve the situation.

An important service data flow generally refers to management data or signaling data.

After the system enables this function, once a security protocol fault occurs, the system can provide re-access to important services to the best of its ability, thus effectively improving availability of the system.

In an embodiment, the security protocol is explained with IPsec protocol as an example.

The security protocol used by the current device is IPsec protocol (ESP tunnel encapsulation), and an important application protocol is a management plane protocol, which adopts the netconf protocol. The security protocol uses Bidirectional Forwarding Detection (BFD) or Dead Peer Detection (DPD) protocol for link detection, and the netconf protocol uses timed handshake to perform link detection. In response to an interrupted netconf link, further operation is performed to check whether it is caused by IPsec link failure.

A user can carry out network planning in advance according to the current network configuration. Once a device security protocol fault occurs, the following operations can be performed: switching to a new transmission IP address, etc., and configuring, on the intermediate routing forwarding device or the centralized access device (such as firewall or SeGW), a new transmission policy, for example, NAT (translation from intranet address in network management or tool to extranet address) or a routing table of the new transmission link (routing to network management or tool extranet), etc.

In response to an interrupted IPsec link being detected, the current device switches from a loopback IP address corresponding to netconf to a physical network interface IP address, and then sets a security rule of the netconf protocol to non-encryption.

If there are other management services, such as an SSH/HTTPs OAM interface, similar to the netconf protocol mentioned above, a previously associated loopback IP is switched to a physical network interface IP, and a corresponding security rule is set to non-encryption.

The network management or tool may bypass SeGW and directly use a public IP to access a current netconf management interface or an SSH/HTTPs service of the device, or translate an intranet address of the network management or tool into public IP through SeGW (in normal work) or front loaded firewall, and place this public IP in the ACL access-allowed list. Other than self-contained security protection of the new protocol netconf/SSH/HTTPs, no IPsec encryption and encapsulation tunneling processing are performed by the device and SeGW on such packet.

Once the temporary link is established, the temporarily generated configuration and rule, as well as the service-related list, are stored, so that the configuration can be read first next time a fault occurs in the link.

If the current device detects restoration of the IPsec link, the current device sets a switching rule, deletes the temporarily generated configuration and rule, then switches to the original configuration, and re-encapsulates the service (netconf/SSH/HTTPs) in the original IPsec protocol.

If the netconf service cannot be restored after switching to the temporary channel is performed, switching to an original configuration is performed in a predetermined time or time periods. If the service still cannot be restored, after the number of switches exceeds a certain threshold, other manners such as reset may be performed to retrieve the situation.

The device may be a base station, a set-top box, or another network device that supports the network security tunneling protocol.

After the system enables this function, once a security protocol fault occurs, the system can provide re-access to important services to the best of its ability, thus effectively improving availability of the system.

In an embodiment, as shown in Fig. 4 , a link detection module is configured to detect a status of the current link. A configuration module is configured to modify a network configuration and a security rule, and a configuration of accessibility of an interface, such that the system can provide re-access to important services to the best of its ability once a security protocol fault occurs.

In an embodiment, the security protocol is explained with MACsec protocol as an example.

The security protocol used by the current device is MACsec protocol (VLAN tag encryption mode), and an important application protocol is a management plane protocol, which adopts the netconf protocol. The netconf protocol uses timing handshake to perform link detection. In response to an interrupted netconf link, further operation is performed to check whether it is caused by the MACsec link.

A user can carry out network planning in advance according to the current network configuration. If a device security protocol fault occurs, a corresponding switching device may remove the current device from a MACsec group, that is, MACsec encryption is no longer performed on a packet of the current device.

If an interrupted netconf link is detected, the current device will set a security rule of the netconf protocol to non-encrypted transit, remove a current port from the MACsec encryption group, or skip MACsec encryption on a current packet, and if a current netconf packet is configured with a VLAN tag (which is encrypted in the MACsec protocol), a previous VLAN configuration will be restored.

If there are other management services, such as SSH/HTTPs OAM interface, similar to the netconf protocol mentioned above, a previously associated security rule will be modified, a current port will be removed from the MACsec encryption group, or MACsec encryption will not be performed on a current packet.

Network management or tool directly accesses the current device via the intermediate forwarding device or the centralized access device. Other than self-contained security protection of the new protocol netconf/SSH/HTTPs, no MACsec encryption and VLAN tag encryption and encapsulation are performed by the centralized access device and switch on such packet.

Once the temporary link is established, the temporarily generated configuration and rule, as well as the service-related list, are stored, so that the configuration can be read first next time a fault occurs in the link.

If the current device detects restoration of the MACsec link, the current device will set a switching rule, delete the temporarily generated configuration and rule, then switch to the original configuration, and re-encapsulate the service (netconf/SSH/HTTPs) in the original MACsec encrypted protocol.

If the netconf service cannot be restored after switching to the temporary link is performed, switching to an original configuration is performed in a predetermined time or time periods. If the service still cannot be restored, after the number of switches exceeds a certain threshold, other manners such as reset may be performed to retrieve the situation.

The current device may be a network device that supports the network security tunneling protocol, for example, a base station, or a set-top box.

After the system enables this function, once a security protocol fault occurs, the system can provide re-access to important services to the best of its ability, thus effectively improving availability of the system.

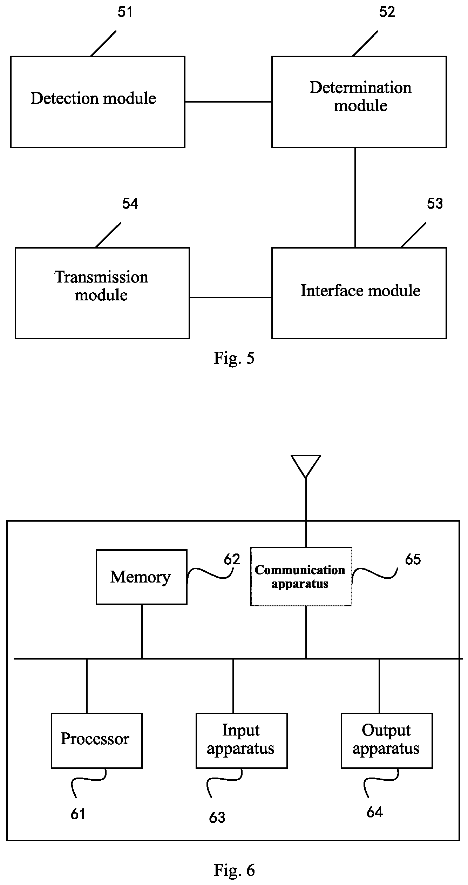

In an embodiment, there is provided a service transmission apparatus, of which a schematic diagram is shown in Fig. 5 . As shown in Fig. 5 , the service transmission apparatus provided in this embodiment of the present invention mainly includes a detection module 51, a determination module 52, an interface module 53, and a transmission module 54.

The detection module 51 is configured to adjust a current network configuration and modify a current security rule in response to a fault of a current link being detected.

The determination module 52 is configured to determine a temporary interface based on an adjusted network configuration.

The interface module 53 is configured to cause the temporary interface to be accessible to an external device, where the temporary interface is utilized to establish a temporary link between the external device and a current device.

The transmission module 54 is configured to perform service transmission using a modified security rule on the temporary link.

**In** an implementation, adjusting a current network configuration includes at least one of: switching from a loopback IP address corresponding to a preset protocol to a physical network interface IP address; adjusting a VLAN configuration; or adjusting an address translation policy of a centralized access device.

In an implementation, the address translation policy of the centralized access device includes at least one of: for the centralized access device, adding a translation relationship between an internal address and an external address, a routing table of the temporary link, or an ACL configuration.

In an implementation, in response to switching from a loopback IP address corresponding to a preset protocol to a physical network interface IP address, determining a temporary interface based on an adjusted network configuration includes: determining a corresponding temporary interface based on the physical network interface IP address.

In an implementation, modifying a current security rule includes at least one of: setting a security rule of unencrypted transit for an important service; removing a current interface from an encryption group; skipping encrypting a current packet; or in response to a VLAN tag being configured for the current packet, returning to a normal VLAN configuration.

In an implementation, the important service includes at least one of: a management plane service, a control plane service, or a user-defined service.

In an implementation, a fault of the current link includes a security link failure and an application link failure.

In an implementation, the temporary link includes: an address translation protocol of an intermediate forwarding device or a centralized access device, and a bypass temporary channel; and performing service transmission using a modified security rule on the temporary link includes:
- in response to the external device accessing the current device through an internal network, performing service transmission through the address translation protocol of the intermediate forwarding device or the centralized access device;
- in response to the external device accessing the current device through the bypass temporary channel, performing service transmission through the bypass temporary channel.

In an implementation, after causing the temporary interface to be accessible to an external device, the method further includes: storing the adjusted network configuration, the modified security rule, and a service list; and in response to the next fault of the link, invoking the stored modified network configuration, modified security rule, and service list.

In an implementation, after causing the temporary interface to be accessible to an external device, the method further includes: switching to the current network configuration according to a set period; and performing a reset operation in response to the number of switching failures exceeding a set number.

In an implementation, after causing the temporary interface to be accessible to an external device, the method further includes: switching to the current network configuration and the current security rule in response to restoration of the current link being detected; and providing a service for the external device using the current network configuration and the current security rule.

In an implementation, the current device includes: a network device that supports a network security tunneling protocol.

The service transmission apparatus provided in this embodiment can perform the service transmission method provided in any of the embodiments of the present invention, and has the corresponding functional modules and beneficial effects for performing the method. For technical details not described in detail in this embodiment, reference may be made to the service transmission method provided in any of the embodiments of the present invention.

It is to be noted that, in the above embodiment of the service transmission apparatus, the units and modules included are divided only according to functional logic, but are not limited to the above division, as long as the corresponding functions can be achieved. In addition, the specific names of the functional units are only for the convenience of distinguishment, and are not used to limit the scope of protection of the present invention.

A further embodiment of the present invention provides a network device, of which a schematic diagram is shown in Fig. 6 . As shown in Fig. 6 , the network device includes a processor 61, a memory 62, an input apparatus 63, an output apparatus 64, and a communication apparatus 65. There may be one or more processors 61 in the network device, and one processor 61 is shown as an example in Fig. 6 . The processor 61, the memory 62, the input apparatus 63, and the output apparatus 64 in the network device can be connected by a bus or in other ways. In Fig. 6 , the connection is realized by a bus as an example.

The memory 62, as a computer-readable storage medium, may be used to store software programs, computer-executable programs, and modules, such as the program instructions/modules (e.g., the detection module 51, determination module 52, interface module 53, and transmission module 54 in the service transmission apparatus) corresponding to the service transmission method in the embodiments of the present invention. The processor 61 executes various functional applications of the network device as well as data processing by running the software programs, instructions, and modules stored in the memory 62, i.e. to implement any of the methods provided in the embodiments of present invention.

The memory 62 may mainly include a storage program area and a storage data area, where the storage program area may store an operating system and application program(s) required by at least one function, and the storage data area may store data created according to the use of the network device, etc. In addition, the memory 62 may include a high-speed random access memory and a non-volatile memory, for example, at least one magnetic disk storage device, a flash memory device, or another non-volatile solid-state storage device. In some examples, the memory 62 may further include memories remotely located with respect to the processor 61, and these remote memories may be connected to the network device via a network. Examples of the above-mentioned network include the Internet, an intranet, a local area network, a mobile communication network, and a combination thereof.

The input apparatus 63 may be configured to receive an input numerical digit or character information and generate a key signal input related to user settings and function control of the network device. The output apparatus 64 may include a display device such as a display screen.

The communication apparatus 65 may include a receiver and a transmitter. The communication apparatus 65 is configured to transmit and receive information according to control of the processor 61.

In an implementation, a further embodiment of the present invention provides a storage medium containing computer-executable instructions which, when executed by a computer processor, cause the computer processor to execute a service transmission method, the method including:
- adjusting a current network configuration and modifying a current security rule in response to a fault of a current link being detected;
- determining a temporary interface based on an adjusted network configuration;
- causing the temporary interface to be accessible to an external device, where the temporary interface is utilized to establish a temporary link between the external device and a current device;
- performing service transmission using a modified security rule on the temporary link.

Of course, for the storage medium including computer-executable instructions provided by an embodiment of the present invention, the computer-executable instructions are not limited to the method operations as described above, but may also perform the relevant operations in the service transmission method according to any embodiment of the present invention.

According to the service transmission method and apparatus, the device, and the storage medium provided by the embodiments of the present invention, in response to a fault of the current link being detected, the current network configuration is adjusted and the current security rule of a service of the current device is modified, and the temporary interface is made accessible to the external device, so that the external device re-accesses the current device. With re-access to services provided through the temporary interface, an interruption of a link between two communication parties caused by network failure and hence a failure of service transmission can be avoided, and availability of a system is effectively improved.

Through the description of the above embodiments, those having ordinary skill in the art can clearly understand that the present invention may be implemented by means of software and essential general-purpose hardware, and of course may alternatively be implemented by hardware, however the former is preferred in many cases. Based on this understanding, the essential part or the part contributing to the prior art of the technical schemes of the present invention may be embodied in the form of software products, which may be stored in a computer-readable storage medium (such as a floppy disk, read-only memory (ROM), random access memory (RAM), flash, hard disk and optical disk) and include instructions to cause a computer device (such as a personal computer, a server, or a network device) to perform the methods of the embodiments of the present invention.

The above-described embodiments are only example embodiments of the present invention, and are not intended to limit the scope of protection of the present invention.

Those having ordinary skill in the art should understand that the term "user terminal" covers any suitable type of wireless user equipment, such as mobile phones, portable data processing equipment, portable web browsers or vehicle-mounted mobile stations.

Generally speaking, various embodiments of the present invention may be implemented in hardware or dedicated circuits, software, logic, or any combination thereof. For example, some aspects may be implemented in hardware, while other aspects may be implemented in firmware or software that may be executed by a controller, a microprocessor or another computing device. However, the present invention is not limited thereto.

Embodiments of the present invention may be implemented by a data processor of a mobile device executing computer program instructions, for example, in a processor entity, or by hardware, or by a combination of software and hardware. The computer program instructions may be assembly instructions, instruction set architecture (ISA) instructions, machine instructions, machine-related instructions, microcode, firmware instructions, state setting data or source code or object code written in any combination of one or more programming languages.

The block diagram of any logic process in the drawings of the present invention may represent program steps, or may represent interconnected logic circuits, modules and functions, or may represent a combination of program steps and logic circuits, modules and functions. The computer program may be stored in a memory. The memory may be of any type that is suitable for a local technical environment and can be implemented using any suitable data storage technology, for example but not limited to, a read-only memory (ROM), a random-access memory (RAM), optical storage devices and systems (a digital versatile disk (DVD) or a compact disk (CD)). The computer-readable medium may include a non-transitory storage medium. The data processor may be any type suitable for the local technical environment, for example but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.
By way of illustrative and non-limiting examples, a detailed description of the embodiments of the present invention has been provided above. However, when considered in connection with the drawings and claims, it is obvious to those skilled in the art that various modifications and adjustments can be made to the above embodiments without departing from the scope of the present invention. Therefore, the appropriate scope of the present invention will be determined according to the claims.

## Claims

1. A method for performing service transmission at a network device that supports a network security protocol, comprising:
adjusting a current network configuration and modifying a current security rule in response to a fault of a current link being detected at the network device, wherein the current link comprises a link or channel for data transmission between the network device and an external device after encryption and decryption by a security gateway, and the external device comprises a remote management device or a remote control device, and wherein adjusting the current network configuration comprises at least one of:
switching from a loopback Internet protocol, IP, address corresponding to a preset protocol to a physical network interface IP address; or
adjusting a virtual local area network, VLAN, configuration;
determining a temporary interface based on an adjusted network configuration;
causing the temporary interface to be accessible to an external device, wherein the temporary interface is utilized to establish a temporary link between the external device and a current device; and
performing service transmission using a modified security rule on the temporary link.

2. The method of claim 1, wherein adjusting a current network configuration further comprises adjusting an address translation policy of a centralized access device.

3. The method of claim 2, wherein the address translation policy of the centralized access device comprises at least one of:
for the centralized access device, adding a translation relationship between an internal address and an external address, a routing table of the temporary link, or an access control list, ACL, configuration.

4. The method of claim 1, wherein in response to switching from a loopback IP address corresponding to the preset network security protocol to a physical network interface IP address, determining a temporary interface based on an adjusted network configuration comprises:
determining a corresponding temporary interface based on the physical network interface IP address.

5. The method of claim 1, wherein modifying a current security rule comprises at least one of:
setting a security rule of unencrypted transit for an important service;
removing a current interface from an encryption group;
skipping encrypting a current packet; or
in response to a VLAN tag being configured for the current packet, returning to a normal VLAN configuration.

6. The method of claim 5, wherein the important service comprises at least one of:
a management plane service, a control plane service, or a user-defined service.

7. The method of claim 1, wherein the temporary link comprises: an address translation protocol of an intermediate forwarding device or a centralized access device, and a bypass temporary channel; and performing service transmission using a modified security rule on the temporary link comprises:
in response to the external device accessing the network device through an internal network, performing service transmission through the address translation protocol of the intermediate forwarding device or the centralized access device; or
in response to the external device accessing the network device through the bypass temporary channel, performing service transmission through the bypass temporary channel.

8. The method of claim 1, after causing the temporary interface to be accessible to an external device, further comprising:
storing the adjusted network configuration, the modified security rule, and a service list; and
in response to a next fault of the link, invoking the stored modified network configuration, modified security rule, and service list.

9. The method of claim 1, after causing the temporary interface to be accessible to an external device, further comprising:
switching to the current network configuration according to a set period; and
performing a reset operation in response to the number of switching failures exceeding a set number.

10. The method of claim 1, after causing the temporary interface to be accessible to an external device, further comprising:
switching to the current network configuration and the current security rule in response to restoration of the current link being detected; and
providing a service for the external device using the current network configuration and the current security rule.

11. The method of claim 1, wherein the temporary link is an emergency or standby link of an important service.

12. An apparatus for performing service transmission at a network device that supports a network security protocol, comprising:
a detection module (51) configured to adjust a current network configuration and modify a current security rule in response to a fault of a current link being detected, wherein the current link comprises a link or channel for data transmission between the network device and an external device after encryption and decryption by a security gateway, and the external device comprises a remote management device or a remote control device, and wherein adjusting the current network configuration comprises at least one of:
switching from a loopback Internet protocol, **IP,** address corresponding to a preset protocol to a physical network interface **IP** address; or
adjusting a virtual local area network, VLAN, configuration;
a determination module (52) configured to determine a temporary interface based on an adjusted network configuration;
an interface module (53) configured to cause the temporary interface to be accessible to an external device, wherein the temporary interface is utilized to establish a temporary link between the external device and a current device; and
a transmission module (54) configured to perform service transmission using a modified security rule on the temporary link.

13. A network device, comprising:
at least one processor (61); and
a memory (62) configured to store at least one program, wherein
the at least one program, when executed by the at least one processor, causes the at least one processor to perform the method of any one of claims 1 to 11.

14. A storage medium storing a computer program which, when executed by a processor, causes the processor to perform the method of any one of claims 1 to 11.

## Patentansprüche

1. Verfahren zum Durchführen einer Dienstübertragung an einer Netzwerkvorrichtung, die ein Netzwerksicherheitsprotokoll unterstützt, umfassend:
Anpassen einer aktuellen Netzwerkkonfiguration und Ändern einer aktuellen Sicherheitsregel als Reaktion auf das Erkennen eines Fehlers einer aktuellen Verbindung an der Netzwerkvorrichtung, wobei die aktuelle Verbindung eine Verbindung oder einen Kanal zur Datenübertragung zwischen der Netzwerkvorrichtung und einer externen Vorrichtung nach Verschlüsselung und Entschlüsselung durch ein Sicherheits-Gateway umfasst, und die externe Vorrichtung eine Fernverwaltungsvorrichtung oder eine Fernsteuerungsvorrichtung umfasst, und wobei das Anpassen der aktuellen Netzwerkkonfiguration mindestens eines von Folgendem umfasst:
Umschalten von einer Loopback-Internetprotokoll-Adresse (IP-Adresse), die einem voreingestellten Protokoll entspricht, auf eine IP-Adresse einer physischen Netzwerkschnittstelle; oder
Anpassen einer Konfiguration eines virtuellen lokalen Netzwerks (VLAN);
Bestimmen einer temporären Schnittstelle basierend auf einer angepassten Netzwerkkonfiguration;
Bewirken, dass die temporäre Schnittstelle für eine externe Vorrichtung zugänglich ist, wobei die temporäre Schnittstelle verwendet wird, um eine temporäre Verbindung zwischen der externen Vorrichtung und einer aktuellen Vorrichtung herzustellen; und
Durchführen einer Dienstübertragung unter Verwendung einer geänderten Sicherheitsregel auf der temporären Verbindung.

2. Verfahren nach Anspruch 1, wobei das Anpassen einer aktuellen Netzwerkkonfiguration ferner das Anpassen einer Adressübersetzungsrichtlinie einer zentralisierten Zugriffsvorrichtung umfasst.

3. Verfahren nach Anspruch 2, wobei die Adressübersetzungsrichtlinie der zentralisierten Zugriffsvorrichtung mindestens eines von Folgendem umfasst:
für die zentralisierte Zugriffsvorrichtung, Hinzufügen einer Übersetzungsbeziehung zwischen einer internen Adresse und einer externen Adresse, einer Routing-Tabelle der temporären Verbindung oder einer Konfiguration einer Zugriffskontrollliste (ACL).

4. Verfahren nach Anspruch 1, wobei als Reaktion auf das Umschalten von einer dem voreingestellten Netzwerksicherheitsprotokoll entsprechenden Loopback-IP-Adresse auf eine IP-Adresse einer physischen Netzwerkschnittstelle das Bestimmen einer temporären Schnittstelle basierend auf einer angepassten Netzwerkkonfiguration umfasst:
Bestimmen einer entsprechenden temporären Schnittstelle basierend auf der IP-Adresse der physischen Netzwerkschnittstelle.

5. Verfahren nach Anspruch 1, wobei das Ändern einer aktuellen Sicherheitsregel mindestens eines von Folgendem umfasst:
Festlegen einer Sicherheitsregel für unverschlüsselten Transit für einen wichtigen Dienst;
Entfernen einer aktuellen Schnittstelle aus einer Verschlüsselungsgruppe;
Überspringen des Verschlüsselns eines aktuellen Pakets; oder
als Reaktion darauf, dass ein VLAN-Tag für das aktuelle Paket konfiguriert ist, Zurückkehren zu einer normalen VLAN-Konfiguration.

6. Verfahren nach Anspruch 5, wobei der wichtige Dienst mindestens eines von Folgendem umfasst: einen Dienst der Verwaltungsebene, einen Dienst der Kontrollebene oder einen benutzerdefinierten Dienst.

7. Verfahren nach Anspruch 1, wobei die temporäre Verbindung umfasst: ein Adressübersetzungsprotokoll einer zwischengeschalteten Weiterleitungsvorrichtung oder einer zentralisierten Zugriffsvorrichtung und einen temporären Umgehungskanal; und wobei das Durchführen einer Dienstübertragung unter Verwendung einer geänderten Sicherheitsregel auf der temporären Verbindung umfasst:
als Reaktion darauf, dass die externe Vorrichtung über ein internes Netzwerk auf die Netzwerkvorrichtung zugreift, Durchführen einer Dienstübertragung über das Adressübersetzungsprotokoll der zwischengeschalteten Weiterleitungsvorrichtung oder der zentralisierten Zugriffsvorrichtung; oder
als Reaktion darauf, dass die externe Vorrichtung über den temporären Umgehungskanal auf die Netzwerkvorrichtung zugreift, Durchführen einer Dienstübertragung über den temporären Umgehungskanal.

8. Verfahren nach Anspruch 1, das nach dem Bewirken, dass die temporäre Schnittstelle für eine externe Vorrichtung zugänglich ist, ferner umfasst:
Speichern der angepassten Netzwerkkonfiguration, der geänderten Sicherheitsregel und einer Dienstliste; und
als Reaktion auf einen nächsten Fehler der Verbindung, Aufrufen der gespeicherten geänderten Netzwerkkonfiguration, geänderten Sicherheitsregel und Dienstliste.

9. Verfahren nach Anspruch 1, das nach dem Bewirken, dass die temporäre Schnittstelle für eine externe Vorrichtung zugänglich ist, ferner umfasst:
Umschalten auf die aktuelle Netzwerkkonfiguration gemäß einem festgelegten Zeitraum; und
Durchführen eines Rücksetzvorgangs als Reaktion darauf, dass die Anzahl der Umschaltfehler eine festgelegte Anzahl überschreitet.

10. Verfahren nach Anspruch 1, das nach dem Bewirken, dass die temporäre Schnittstelle für eine externe Vorrichtung zugänglich ist, ferner umfasst:
Umschalten auf die aktuelle Netzwerkkonfiguration und die aktuelle Sicherheitsregel als Reaktion auf das Erkennen einer Wiederherstellung der aktuellen Verbindung; und
Bereitstellen eines Dienstes für die externe Vorrichtung unter Verwendung der aktuellen Netzwerkkonfiguration und der aktuellen Sicherheitsregel.

11. Verfahren nach Anspruch 1, wobei die temporäre Verbindung eine Notfall- oder Standby-Verbindung eines wichtigen Dienstes ist.

12. Vorrichtung zum Durchführen einer Dienstübertragung an einer Netzwerkvorrichtung, die ein Netzwerksicherheitsprotokoll unterstützt, umfassend:
ein Erkennungsmodul (51), das zum Anpassen einer aktuellen Netzwerkkonfiguration und Ändern einer aktuellen Sicherheitsregel als Reaktion auf das Erkennen eines Fehlers einer aktuellen Verbindung konfiguriert ist, wobei die aktuelle Verbindung eine Verbindung oder einen Kanal zur Datenübertragung zwischen der Netzwerkvorrichtung und einer externen Vorrichtung nach Verschlüsselung und Entschlüsselung durch ein Sicherheits-Gateway umfasst, und die externe Vorrichtung eine Fernverwaltungsvorrichtung oder eine Fernsteuerungsvorrichtung umfasst, und wobei das Anpassen der aktuellen Netzwerkkonfiguration mindestens eines von Folgendem umfasst:
Umschalten von einer Loopback-Internetprotokoll-Adresse (IP-Adresse), die einem voreingestellten Protokoll entspricht, auf eine IP-Adresse einer physischen Netzwerkschnittstelle; oder
Anpassen einer Konfiguration eines virtuellen lokalen Netzwerks (VLAN);
ein Bestimmungsmodul (52), das zum Bestimmen einer temporären Schnittstelle basierend auf einer angepassten Netzwerkkonfiguration konfiguriert ist;
ein Schnittstellenmodul (53), das zum Bewirken, dass die temporäre Schnittstelle für eine externe Vorrichtung zugänglich ist, konfiguriert ist, wobei die temporäre Schnittstelle verwendet wird, um eine temporäre Verbindung zwischen der externen Vorrichtung und einer aktuellen Vorrichtung herzustellen; und
ein Übertragungsmodul (54), das zum Durchführen einer Dienstübertragung unter Verwendung einer geänderten Sicherheitsregel auf der temporären Verbindung konfiguriert ist.

13. Netzwerkvorrichtung, umfassend:
mindestens einen Prozessor (61); und
einen Speicher (62), der zum Speichern mindestens eines Programms konfiguriert ist, wobei
das mindestens eine Programm, wenn es von dem mindestens einen Prozessor ausgeführt wird, den mindestens einen Prozessor dazu veranlasst, das Verfahren nach einem der Ansprüche 1 bis 11 durchzuführen.

14. Speichermedium, das ein Computerprogramm speichert, das, wenn es von einem Prozessor ausgeführt wird, den Prozessor dazu veranlasst, das Verfahren nach einem der Ansprüche 1 bis 11 durchzuführen.

## Revendications

1. Procédé pour effectuer une transmission de service au niveau d'un dispositif de réseau qui prend en charge un protocole de sécurité de réseau, comprenant:
le réglage d'une configuration de réseau actuelle et la modification d'une règle de sécurité actuelle en réponse à la détection d'une défaillance d'une liaison actuelle au niveau du dispositif de réseau, dans lequel la liaison actuelle comprend une liaison ou un canal pour la transmission de données entre le dispositif de réseau et un dispositif externe après chiffrement et déchiffrement par une passerelle de sécurité, et le dispositif externe comprend un dispositif de gestion à distance ou un dispositif de contrôle à distance, et dans lequel le réglage de la configuration de réseau actuelle comprend au moins un parmi:
la commutation depuis une adresse de protocole Internet, IP, de bouclage correspondant à un protocole prédéfini vers une adresse IP d'interface réseau physique; ou
le réglage d'une configuration de réseau local virtuel, VLAN;
la détermination d'une interface temporaire sur la base d'une configuration de réseau réglée;
faire en sorte que l'interface temporaire soit accessible à un dispositif externe, dans lequel l'interface temporaire est utilisée pour établir une liaison temporaire entre le dispositif externe et un dispositif actuel; et
l'exécution d'une transmission de service à l'aide d'une règle de sécurité modifiée sur la liaison temporaire.

2. Procédé selon la revendication 1, dans lequel le réglage d'une configuration de réseau actuelle comprend en outre le réglage d'une politique de traduction d'adresses d'un dispositif d'accès centralisé.

3. Procédé selon la revendication 2, dans lequel la politique de traduction d'adresses du dispositif d'accès centralisé comprend au moins l'un des éléments suivants:
pour le dispositif d'accès centralisé, l'ajout d'une relation de traduction entre une adresse interne et une adresse externe, d'une table de routage de la liaison temporaire, ou d'une configuration de liste de contrôle d'accès, ACL.

4. Procédé selon la revendication 1, dans lequel en réponse à la commutation depuis une adresse IP de bouclage correspondant au protocole de sécurité de réseau prédéfini vers une adresse IP d'interface réseau physique, la détermination d'une interface temporaire sur la base d'une configuration de réseau réglée comprend:
la détermination d'une interface temporaire correspondante sur la base de l'adresse IP d'interface réseau physique.

5. Procédé selon la revendication 1, dans lequel la modification d'une règle de sécurité actuelle comprend au moins un parmi :
la définition d'une règle de sécurité de transit non chiffré pour un service important;
la suppression d'une interface actuelle d'un groupe de chiffrement;
le saut du chiffrement d'un paquet actuel; ou
en réponse à la configuration d'une étiquette VLAN pour le paquet actuel, le retour à une configuration VLAN normale.

6. Procédé selon la revendication 5, dans lequel le service important comprend au moins l'un des éléments suivants: un service de plan de gestion, un service de plan de contrôle ou un service défini par l'utilisateur.

7. Procédé selon la revendication 1, dans lequel la liaison temporaire comprend : un protocole de traduction d'adresses d'un dispositif de retransmission intermédiaire ou d'un dispositif d'accès centralisé, et un canal temporaire de dérivation ; et l'exécution d'une transmission de service à l'aide d'une règle de sécurité modifiée sur la liaison temporaire comprend:
en réponse à l'accès du dispositif externe au dispositif de réseau à travers un réseau interne, l'exécution d'une transmission de service à travers le protocole de traduction d'adresses du dispositif de retransmission intermédiaire ou du dispositif d'accès centralisé; ou
en réponse à l'accès du dispositif externe au dispositif de réseau à travers le canal temporaire de dérivation, l'exécution d'une transmission de service à travers le canal temporaire de dérivation.

8. Procédé selon la revendication 1, comprenant en outre, après avoir rendu l'interface temporaire accessible à un dispositif externe :
le stockage de la configuration de réseau réglée, de la règle de sécurité modifiée, et d'une liste de services ; et
en réponse à une défaillance suivante de la liaison, l'appel de la configuration de réseau modifiée stockée, de la règle de sécurité modifiée stockée, et de la liste de services stockée.

9. Procédé selon la revendication 1, comprenant en outre, après avoir rendu l'interface temporaire accessible à un dispositif externe:
la commutation vers la configuration de réseau actuelle selon une période définie; et
l'exécution d'une opération de réinitialisation en réponse au fait que le nombre d'échecs de commutation dépasse un nombre défini.

10. Procédé selon la revendication 1, comprenant en outre, après avoir rendu l'interface temporaire accessible à un dispositif externe :
la commutation vers la configuration de réseau actuelle et la règle de sécurité actuelle en réponse à la détection du rétablissement de la liaison actuelle ; et
la fourniture d'un service pour le dispositif externe à l'aide de la configuration de réseau actuelle et de la règle de sécurité actuelle.

11. Procédé selon la revendication 1, dans lequel la liaison temporaire est une liaison d'urgence ou de secours d'un service important.

12. Appareil pour effectuer une transmission de service au niveau d'un dispositif de réseau qui prend en charge un protocole de sécurité de réseau, comprenant :
un module de détection (51) configuré pour régler une configuration de réseau actuelle et modifier une règle de sécurité actuelle en réponse à la détection d'une défaillance d'une liaison actuelle, dans lequel la liaison actuelle comprend une liaison ou un canal pour la transmission de données entre le dispositif de réseau et un dispositif externe après chiffrement et déchiffrement par une passerelle de sécurité, et le dispositif externe comprend un dispositif de gestion à distance ou un dispositif de contrôle à distance, et dans lequel le réglage de la configuration de réseau actuelle comprend au moins un parmi :
la commutation depuis une adresse de protocole Internet, IP, de bouclage correspondant à un protocole prédéfini vers une adresse IP d'interface réseau physique; ou
le réglage d'une configuration de réseau local virtuel, VLAN;
un module de détermination (52) configuré pour déterminer une interface temporaire sur la base d'une configuration de réseau réglée;
un module d'interface (53) configuré pour rendre l'interface temporaire accessible à un dispositif externe, dans lequel l'interface temporaire est utilisée pour établir une liaison temporaire entre le dispositif externe et un dispositif actuel; et
un module de transmission (54) configuré pour effectuer une transmission de service en utilisant une règle de sécurité modifiée sur la liaison temporaire.

13. Dispositif de réseau, comprenant :
au moins un processeur (61); et
une mémoire (62) configurée pour stocker au moins un programme, dans lequel l'au moins un programme, lorsqu'il est exécuté par l'au moins un processeur, amène l'au moins un processeur à exécuter le procédé selon l'une quelconque des revendications 1 à 11.

14. Support de stockage stockant un programme informatique qui, lorsqu'il est exécuté par un processeur, amène le processeur à exécuter le procédé selon l'une quelconque des revendications 1 à 11.
